# EUROPÄISCHE PATENTSCHRIFT

(11) **EP 2 986 423 B1**
(45) Veröffentlichungstag und Bekanntmachung des Hinweises auf die Patenterteilung: **13.12.2017**
(21) Anmeldenummer: 14717739.8
(22) Anmeldetag: 11.04.2014
(51) Int. Cl.: B25J 15/00, B25J 15/02

(54) **GREIF-SCHWENK-EINHEIT**
GRIPPER-SWIVEL UNIT
UNITÉ DE PRÉHENSION ET DE PIVOTEMENT

(30) Priorität: 19.04.2013 DE 102013207179
(43) Veröffentlichungstag der Anmeldung: 24.02.2016
(73) Patentinhaber: Schunk GmbH & Co. KG Spann- und Greiftechnik, 74348 Lauffen (DE)
(72) Erfinder: BECKER, Ralf, 71672 Marbach (DE); DRAB, Michael, 73033 Goeppingen (DE); QUAAS, Matthias, 74232 Abstatt (DE)
(74) Vertreter: DREISS Patentanwälte PartG mbB
(86) Internationale Anmeldenummer: PCT/EP2014/057416
(87) Internationale Veröffentlichungsnummer: WO 2014/170235

(56) Entgegenhaltungen:
- DE-U1-202011 106 379
- JP-A- 2012 081 564
- JP-A- 2012 086 334
- US-A1- 2006 263 270
- US-B1- 6 264 419

## Beschreibung

Die Erfindung betrifft eine Greif-Schwenk-Einheit mit einer Schwenkeinheit, die ein Grundteil und ein gegenüber dem Grundteil um eine Drehachse verdrehbar angeordnetes Drehteil umfasst, und mit einer am Drehteil angeordneten Greifeinheit mit wenigstens zwei aufeinander zu und voneinander weg bewegbaren Backen.

Derartige Greif-Schwenk-Einheiten sind aus dem vorbekannten Stand der Technik bekannt, um Gegenstände zu greifen und diese in ihrer Winkellage zu verdrehen. Dabei werden regelmäßig zwei separate Einzelkomponenten, nämlich zum einen die Greifeinheit um zum anderen die Schwenkeinheit, bereitgestellt, wobei die Greifeinheit dann an der Schwenkeinheit, beispielsweise mittels Befestigungsschrauben, angebracht wird. Für den Fall, dass elektrische Greifeinheiten Verwendung finden, ist der Aufwand vergleichsweise hoch, da insbesondere elektrische Drehdurchführungen, wie beispielsweise Schleifringe oder abwickelbare Leitungen, vorgesehen werden müssen. Eine elektrische Greifeinheit ist beispielsweise aus der DE 20 2011 106379 U1 vorbekannt.

US 2006/263270 A1 offenbart eine Greif-Schwenk-Einheit mit allen Merkmalen des Oberbegriffs des Anspruchs 1.

JP 2012 086334 A offenbart eine andere Greif-Schwenk-Einheit.

Der vorliegenden Erfindung liegt die Aufgabe zu Grunde, eine eingangs genannte Greif-Schwenk-Einheit bereitzustellen, die eine elektrische angetriebene Greifeinheit aufweist, wobei deren Aufbau vergleichsweise einfach und dennoch funktionssicher sein soll.

Diese Aufgabe wird mit einer Greif-Schwenk-Einheit mit den Merkmalen des Anspruchs 1 gelöst. Insbesondere ist bei einer derartigen Greif-Schwenk-Einheit vorgesehen, dass am Drehteil ein Getriebe zum Antreiben der Greifeinheit vorgesehen ist, welches über ein in der Drehachse liegendes Antriebsritzel antreibbar sein kann. Zudem ist im Grundteil ein erster, insbesondere das Antriebsritzel antreibender Elektromotor vorgesehen. Zudem ist im Grundteil ein zweiter Elektromotor vorgesehen, der zum Verdrehen des Drehteils mit dem Drehteil drehgekoppelt ist. Außerdem ist vorgesehen, dass die Schwenkeinheit und die beiden Elektromotoren derart ausgebildet sind, dass das vom zweiten Elektromotor erzeugte Drehmoment des Drehteils um ein Vielfaches größer ist als das vom ersten Elektromotor erzeugte Drehmoment der Greifeinheit bei Erreichen einer Hubendlage der Backen. Dies hat den Hintergrund, dass dann, wenn lediglich der erste Elektromotor zum Verfahren der Backen angetrieben wird, die Greifeinheit dann zu rotieren beginnt, wenn die Backen ihre Hubendlage erreichen. Diese Rotation kann dadurch verhindert werden, dass das Drehmoment, das vom zweiten Elektromotor erzeugt wird und auf das Drehteil wirkt, um ein Vielfaches größer ist, als das Drehmoment der Greifeinheit, das vom ersten Elektromotor bei Erreichen einer Hubendlage der Backen erzeugt wird.

Insbesondere dadurch, dass das Getriebe über ein in der Drehachse liegendes Antriebsritzel antreibbar ist, kann die Greifeinheit in beliebiger Drehstellung durch entsprechendes Ansteuern des ersten Elektromotors betätigt werden. Der erste Elektromotor als solcher ist dabei drehfest insbesondere am Grundteil angeordnet. Durch Vorsehen des zweiten Elektromotors im Grundteil, der im Grundteil insbesondere ebenfalls drehfest angeordnet ist, kann das Drehteil der Schwenkeinheit verdreht werden.

Dabei ist vorteilhaft, wenn die Abtriebswelle des ersten Elektromotors in der Drehachse liegt und wenn an der Abtriebswelle das Antriebsritzel angeordnet ist. Hierdurch ergibt sich ein vergleichsweise einfacher Aufbau, wobei zudem gewährleistet wird, dass das Drehteil trotz drehfest angeordnetem ersten Elektromotor um die Drehachse des Elektromotors verdrehbar ist.

Das Getriebe kann insbesondere als Stirnrad- oder Planetengetriebe ausgebildet sein. Hierdurch kann eine geeignete Unter- oder Übersetzung bereitgestellt werden, ohne groß Bauraum zu beanspruchen.

Die Drehachse des zweiten Elektromotors verläuft insbesondere parallel zur Drehachse des ersten Elektromotors. Auch hierdurch kann eine kompakte Bauweise der Einheit realisiert werden.

Das Drehteil kann ein Hohlstirnrad mit einer Innen- und/oder Außenverzahnung aufweisen, wobei diese Verzahnung mit einem an der Abtriebswelle des zweiten Elektromotors angeordneten Ritzel kämmt. Auf diese Art und Weise kann eine vergleichsweise einfache und bauraumsparende Drehkopplung zwischen dem zweiten Elektromotor und dem Drehteil realisiert werden.

Das Drehteil kann dabei einen topfförmigen Grundkörper zur Aufnahme des Getriebes aufweisen, dessen radial äußerer Bereich mittels einem Drehlager am Grundteil drehbar angeordnet ist. Die ringförmige Wand des Grundkörpers kann dabei eine Innen- und/oder Außenverzahnung vorsehen, über die das Drehteil letztlich vom zweiten Elektromotor angetrieben wird. Der Grundkörper kann dabei im Bereich seines Topfbodens offen ausgebildet sein, insbesondere können Getriebeabschnitte durch den Topfboden des Grundkörpers hindurchgreifen, um mit der Greifeinheit zusammenzuwirken.

Die Backen der Greifeinheit können zudem einen Zahnstangenabschnitt derart vorsehen, dass ein Abtriebsritzel des Getriebes zur Verlagerung der Backen die Zahnstangenabschnitte kämmt. Gerade dieses Abtriebsritzel kann den Topfboden des Grundkörpers durchgreifen und in den Bereich zwischen die Zahnstangenabschnitte der beiden Backen eingreifen.

Zur Erfassung und/oder Erreichen einer Drehstellung des Drehteils ist denkbar, dass im Grundteil und/oder im Drehteil entsprechende Drehsensoren- und/oder Drehanschläge angeordnet sind.

Im Grundteil kann zudem eine Elektronikeinheit zur Ansteuerung der beiden Elektromotoren vorgesehen sein, insbesondere dann, wenn zudem Drehsensoren vorhanden sind, kann die Elektronikeinheit zudem die Messsignale der Drehsensoren auswerten, um letztlich die Drehstellung des Drehteils, und damit der Schwenkeinheit, zu bestimmen.

Ferner ist vorteilhaft, wenn die Schwenkeinheit und die beiden Elektromotoren derart ausgebildet sind, dass die Drehgeschwindigkeit des ersten Elektromotors um ein Vielfaches größer ist als die Drehgeschwindigkeit des zweiten Elektromotors.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
Figur 1 eine Draufsicht auf eine erfindungsgemäße Greif-Schwenk-Einheit;
Figur 2 einen Schnitt durch die Greifeinheit gemäß Figur 1 entlang der Linie II und
Figur 3 einen Schnitt durch die Einheit gemäß Figur 1 entlang der Linie III.

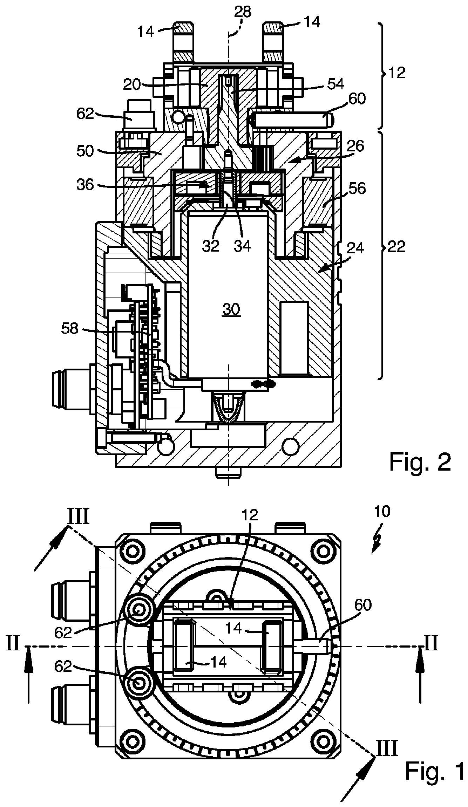

In der Figur 1 ist die erfindungsgemäße Greif-Schwenk-Einheit 10 in Draufsicht gezeigt, wobei die Greif-Schwenk-Einheit eine im Wesentlichen quadratische Grundform aufweist. Deutlich zu erkennen ist, eine Greifeinheit 12 mit zwei aufeinander zu und voneinander weg verfahrbaren Backen 14.

Die Greifeinheit 10 entspricht dabei im Aufbau der Greifvorrichtung, wie sie in der DE 20 2011 106 379 U1 beschrieben ist. Die Backen 14, beziehungsweise deren Backengrundkörper 16 weisen an den beiden einander zugewandten Seiten jeweils einen Zahnstangenabschnitt 18 auf, die mit einem zwischen den Zahnstangenabschnitten 18 angeordneten Abtriebsritzel 20 kämmen. Durch Verdrehen des Abtriebsritzels 20 werden folglich die Backengrundkörper 16 verlagert beziehungsweise die Backen 14 aufeinander zu oder voneinander weg bewegt.

Die Greifeinheit 12 ist dabei, wie insbesondere aus Figur 2 deutlich wird, an der Schwenkeinheit 22 angeordnet. Die Schwenkeinheit 22 umfasst ein Grundteil 24 und ein am Grundteil 24 drehbar angeordnetes Drehteil 26. Das Drehteil 26 ist dabei um eine Drehachse 28 verdrehbar.

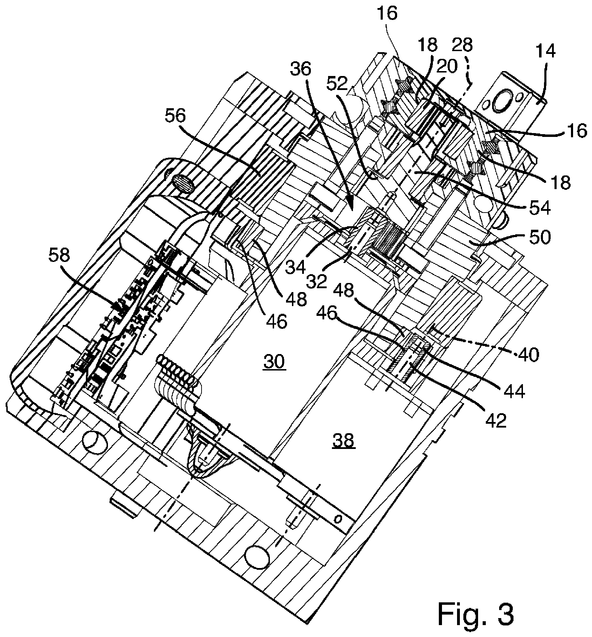

Wie aus Figur 2 und 3 deutlich wird, ist entlang der Drehachse 28 innerhalb des Grundteils 24 ein erster Elektromotor 30 untergebracht. Der Elektromotor 30 umfasst eine Abtriebswelle 32, an der ein Antriebsritzel 34 angeordnet ist. Das Antriebsritzel 34, dessen Drehachse identisch mit der Drehachse 28 des Drehteils 26 ist, treibt ein Stirnradgetriebe 36 an, das aus mehreren miteinander zusammenwirkenden Zahnrädern besteht. Das letzte Glied des Stirnradgetriebes 36 bildet das Abtriebsritzel 20, das letztlich die beiden Backengrundkörper 16, beziehungsweise deren Backen 14, antreibt.

Wie aus dem Schnitt gemäß Figur 3 deutlich wird, ist parallel zur Drehachse 28 ein zweiter Elektromotor 38 im Grundteil 24, und zwar in Draufsicht im Bereich einer Ecke des Grundteils 24, untergebracht. Die Drehachse 40 dieses zweiten Elektromotors 38 verläuft dabei parallel zur Drehachse 28 des Drehteils 26 beziehungsweise des ersten Elektromotors 30.

An der Abtriebswelle 42 des Elektromotors 38 ist ein Antriebsritzel 44 vorgesehen, das eine Außenverzahnung 46 eines Hohlstirnradabschnitts 48 eines drehteilseitigen Grundkörpers 50 kämmt. Durch entsprechendes Ansteuern des Elektromotors 38 wird folglich das Drehteil 26 über den Grundkörper 50 beziehungsweise dessen Hohlstirnradabschnitt 48 angetrieben.

Wie aus dem Schnitt gemäß Figur 3 deutlich wird, ist der Grundkörper 50 topfförmig ausgebildet, wobei er am Topfboden einen Durchbruch 52 aufweist, durch den ein Getriebeglied 54, an dessen freien Endes das Abtriebsritzel 20 angeordnet ist, den Topfboden durchgreift.

Zwischen dem Grundteil 24 und dem Drehteil 26 ist ein Drehlager 56 vorgesehen, das sich im radial äußeren Abschnitt am Grundteil 44 abstützt und im radial inneren Bereich am Grundkörper 50 abstützt.

Wie aus Figur 2 deutlich wird ist im Grundteil 24 eine Elektronikeinheit 58 vorgesehen, über die die beiden Elektromotoren 30 und 38 ansteuerbar sind. Am Grundteil 24 können zudem Drehsensoren vorgesehen sein, die die Drehstellung des Drehteils 26 gegenüber dem Grundteil 24 messen. Die Messsignale können dann zu deren Auswertung der Elektronikeinheit 58 zugeführt werden.

Wie aus Figur 1 deutlich wird, ist am Drehteil 26 ein Drehanschlag in Form eines sich in radialer Richtung erstreckenden Zapfens 60 vorgesehen. In den Drehendlagen sind Gegenanschläge 62 am Grundteil 24 vorgesehen, gegen welche der Zapfen 60 in der jeweiligen Drehendlage wirkt.

Zum Verfahren der Backen 14 kann folglich der Elektromotor 30 angesteuert werden. Je nach Drehrichtung der Abtriebswelle 32 des Elektromotors 30 wird über das Stirnradgetriebe 36 das Abtriebsritzel 20 betätigt, und damit die Backen 14 bewegt. Durch Betätigen des Elektromotors 38 wird das Drehteil 26 gegenüber dem Grundteil 24 verdreht. Auf Grund des beschriebenen Aufbaus der Einheit 10 sind keine elektrischen Drehdurchführungen zwischen dem Grundteil 24 und dem Drehteil 26 erforderlich. Dennoch kann die sich am Drehteil 26 befindliche, verdrehbare Greifeinheit 12 in jeder Drehlage geöffnet oder geschlossen werden.

Für den Fall, dass lediglich der Elektromotor 30 betätigt wird und die Backen 14 ihre Hubendlage erreichen, beispielsweise weil sie auf einen zu greifenden Gegenstand aufschlagen, kann es zu einem Verdrehen der Dreheinheit 12 kommen. Dies kann allerdings dadurch wirkungsvoll unterbunden werden, dass die Schwenkeinheit 22 und die beiden Elektromotoren 30, 38 derart ausgebildet sind, dass das vom zweiten Elektromotor 38 erzeugte Drehmoment des Drehteils 26 um ein Vielfaches größer ist als das vom ersten Elektromotor 30 erzeugte Drehmoment der Greifeinheit 12 bei Erreichen der Hubendlage der Backen.

In diesem Zusammenhang ist es vorteilhaft, wenn die Schwenkeinheit 22 und die beiden Elektromotoren 30, 38 zudem derart ausgebildet sind, dass die Drehgeschwindigkeit des ersten Elektromotors 30 um ein Vielfaches größer ist als die Drehgeschwindigkeit des zweiten Elektromotors 38.

Die in den Figuren beschriebene Schwenk-Greif-Einheit 10 hat folglich insbesondere den Vorteil, dass sie ein vergleichsweisen einfachen Aufbau aufweist, und dennoch die Greifeinheit 12 elektromotorisch betätigt wird, ohne das elektrische Drehdurchführungen erforderlich sind.

## Patentansprüche

1. Greif-Schwenk-Einheit (10), mit einer Schwenkeinheit (22), die ein Grundteil (24) und ein gegenüber dem Grundteil (24) um eine Drehachse (28) verdrehbar angeordnetes Drehteil (26) umfasst, und mit einer am Drehteil (26) angeordneten Greifeinheit (12) mit zwei aufeinander zu und voneinander weg bewegbaren Backen (14), wobei am Drehteil (26) ein Getriebe (36) zum Antreiben der Greifeinheit (12) vorgesehen ist, wobei im Grundteil (24) ein erster, das Getriebe (36) antreibender Elektromotor (30) vorgesehen ist, und wobei im Grundteil (24) ein zweiter Elektromotor (38) vorgesehen ist, der zum Verdrehen des Drehteils (26) mit dem Drehteil (26) drehgekoppelt ist, **dadurch gekennzeichnet, dass** die Schwenkeinheit (22) und die beiden Elektromotoren (30, 38) derart ausgebildet sind, dass das vom zweiten Elektromotor (38) erzeugte Drehmoment des Drehteils (26) um ein Vielfaches größer ist als das vom ersten Elektromotor (30) erzeugte Drehmoment der Greifeinheit (12) bei Erreichen einer Hubendlage der Backen.

2. Einheit (10) nach Anspruch 1, **dadurch gekennzeichnet, dass** das Getriebe (36) über ein in der Drehachse (28) liegendes Antriebsritzel (34) antreibbar ist, wobei das Antriebsritzel (34) vom ersten Elektromotor (30) antreibbar ist.

3. Einheit (10) nach Anspruch 2, **dadurch gekennzeichnet, dass** die Abtriebswelle (32) des ersten Elektromotors (30) in der Drehachse (28) liegt und dass an der Abtriebswelle (32) das Antriebsritzel (34) angeordnet ist.

4. Einheit (10) nach Anspruch 1, 2 oder 3, **dadurch gekennzeichnet, dass** das Getriebe (36) als Stirnradgetriebe ausgebildet ist.

5. Einheit (10) nach einem der vorhergehenden Ansprüche, **dadurch gekennzeichnet, dass** die Drehachse (40) des zweiten Elektromotors (38) parallel zur Drehachse (28) des ersten Elektromotors (30) verläuft.

6. Einheit (10) nach einem der vorhergehenden Ansprüche, **dadurch gekennzeichnet, dass** das Drehteil (26) ein Hohlstirnrad (48) mit einer Innen- und/oder Außenverzahnung (46) aufweist, die mit einem an der Abtriebswelle (42) des zweiten Elektromotors (38) angeordneten Antriebsritzel (44) kämmt.

7. Einheit (10) nach einem der vorhergehenden Ansprüche, **dadurch gekennzeichnet, dass** das Drehteil (26) einen topfförmigen Grundkörper (50) zur Aufnahme des Getriebes (36) aufweist, dessen radial äußerer Bereich mittels einem Drehlager (56) am Grundteil (24) drehbar angeordnet ist.

8. Einheit (10) nach einem der vorhergehenden Ansprüche, **dadurch gekennzeichnet, dass** die Backen (14) der Greifeinheit (12) jeweils ein Zahnstangenabschnitt (18) derart vorsehen, dass ein Abtriebsritzel (20) des Getriebes (36) zur Verlagerung der Backen (14) die Zahnstangenabschnitte (18) kämmt.

9. Einheit (10) nach einem der vorhergehenden Ansprüche, **dadurch gekennzeichnet, dass** im Grundteil (24) und/oder im Drehteil (26) Drehsensoren zur Erfassung der Drehstellung des Drehteils (26) vorgesehen sind.

10. Einheit (10) nach einem der vorhergehenden Ansprüche, **dadurch gekennzeichnet, dass** im Grundteil (24) eine Elektronikeinheit (58) zur Ansteuerung der beiden Elektromotoren (30, 38) vorgesehen ist.

11. Einheit (10) nach einem der vorhergehenden Ansprüche, **dadurch gekennzeichnet, dass** die Schwenkeinheit (22) und die beiden Elektromotoren (30, 38) derart ausgebildet sind, dass die Drehgeschwindigkeit des ersten Elektromotors (30) um ein Vielfaches größer ist als die Drehgeschwindigkeit des zweiten Elektromotors (38).

## Claims

1. A gripper swivel unit (10), having a swivel unit (22) that includes a base part (24) and a rotating part (26) located rotatably relative to the base part (24) about a rotary axis (28), and having a gripper unit (12) located on the rotating part (26) with two jaws (14) movable toward and away from one another, wherein a gear (36) for driving the gripper unit (12) is provided on the rotating part (26), a first electric motor (30) driving the gear (36) is provided in the base part (24), and a second electric motor (38) is provided in the base part (24), which is rotationally coupled with the rotating part (26) for rotating the rotating part (26), **characterized in that** the swivel unit (22) and the two electric motors (30, 38) are embodied such that the torque of the rotating part (26) generated by the second electric motor (38) is multiple times greater than the torque of the gripper unit (12) generated by the first electric motor (30) upon reaching a terminal stroke position of the jaws.

2. The unit (10) of claim 1, **characterized in that** the gear (36) is drivable via a drive pinion (34) located in the rotary axis (28), and the drive pinion (34) is drivable by the first electric motor (30).

3. The unit (10) of claim 2, **characterized in that** the driven shaft (32) of the first electric motor (30) is located in the rotary axis (28); and that the drive pinion (34) is located on the driven shaft (32).

4. The unit (10) of claim 1, 2 or 3, **characterized in that** the gear (36) is embodied as a spur gear.

5. The unit (10) of one of the foregoing claims, **characterized in that** the rotary axis (40) of the second electric motor (38) extends parallel to the rotary axis (28) of the first electric motor (30).

6. The unit (10) of one of the foregoing claims, **characterized in that** the rotating part (26) has an annular gear (48) with an inner and/or outer set of teeth (46) that meshes with a drive pinion (44) located on the driven shaft (42) of the second electric motor (38).

7. The unit (10) of one of the foregoing claims, **characterized in that** the rotating part (26) has a cup-shaped base body (50) for receiving the gear (36), the radially outer region of which is located rotatably on the base part (24) by means of a rotary bearing (56).

8. The unit (10) of one of the foregoing claims, **characterized in that** the jaws (14) of the gripper unit (12) each provide a rack segment (18) in such a way that for shifting the jaws (14), a driven pinion (20) of the gear (36) engages the rack segments (18).

9. The unit (10) of one of the foregoing claims, **characterized in that** in the base part (24) and/or in the rotating part (26), rotation sensors are provided for detecting the rotary position of the rotating part (26).

10. The unit (10) of one of the foregoing claims, **characterized in that** in the base part (24), an electronic unit (58) is provided for triggering the two electric motors (30, 38).

11. The unit (10) of one of the foregoing claims, **characterized in that** the swivel unit (22) and the two electric motors (30, 38) are embodied such that the rotary speed of the first electric motor (30) is multiple times greater than the rotary speed of the second electric motor (38).

## Revendications

1. Unité de préhension et de pivotement (10) comprenant une unité de pivotement (22) qui comprend une partie de base (24) et une partie rotative (26) disposée de manière à pouvoir tourner autour d'un axe de rotation (28) par rapport à ladite partie de base (24), ainsi qu'une unité de préhension (12) qui est disposée sur ladite partie rotative (26) et qui comprend deux mâchoires (14) qui peuvent être rapprochées et éloignées l'une de l'autre, dans laquelle un engrenage (36) destiné à entraîner l'unité de préhension (12) est prévu sur la partie rotative (26), dans laquelle un premier moteur électrique (30) qui entraîne ledit engrenage (36) est prévu dans la partie de base (24), et dans laquelle un deuxième moteur électrique (38) est prévu dans la partie de base (24), qui est accouplé en rotation avec la partie rotative (26) pour faire tourner la partie rotative (26), **caractérisée par le fait que** ladite unité de pivotement (22) et les deux moteurs électriques (30, 38) sont conçus de telle sorte que, lorsqu'une position de fin de course des mâchoires est atteinte, le couple de la partie rotative (26) qui est généré par le deuxième moteur électrique (38) est d'un multiple supérieur au couple de l'unité de préhension (12) qui est généré par le premier moteur électrique (30).

2. Unité (10) selon la revendication 1, **caractérisée par le fait que** ledit engrenage (36) peut être entraîné par le biais d'un pignon d'entraînement (34) situé dans l'axe de rotation (28), ledit pignon d'entraînement (34) pouvant être entraîné par le premier moteur électrique (30).

3. Unité (10) selon la revendication 2, **caractérisée par le fait que** l'arbre de sortie (32) du premier moteur électrique (30) est situé dans l'axe de rotation (28) et que le pignon d'entraînement (34) est disposé sur ledit arbre de sortie (32).

4. Unité (10) selon la revendication 1, 2 ou 3, **caractérisée par le fait que** l'engrenage (36) est réalisé en tant qu'engrenage droit.

5. Unité (10) selon l'une quelconque des revendications précédentes, **caractérisée par le fait que** l'axe de rotation (40) du deuxième moteur électrique (38) s'étend parallèlement à l'axe de rotation (28) du premier moteur électrique (30).

6. Unité (10) selon l'une quelconque des revendications précédentes, **caractérisée par le fait que** la partie rotative (26) présente une roue dentée droite creuse (48) ayant une denture intérieure et/ou extérieure (46) qui s'engrène avec un pignon d'entraînement (44) disposé sur l'arbre de sortie (42) du deuxième moteur électrique (38).

7. Unité (10) selon l'une quelconque des revendications précédentes, **caractérisée par le fait que** ladite partie rotative (26) présente un corps de base (50) en forme de pot destiné à recevoir l'engrenage (36), dont la zone radialement extérieure est disposée à rotation au moyen d'un coussinet de pivotement (56) sur la partie de base (24).

8. Unité (10) selon l'une quelconque des revendications précédentes, **caractérisée par le fait que** les mâchoires (14) de l'unité de préhension (12) prévoient chacune une portion de crémaillère (18) de telle manière qu'un pignon entraîné (20) de l'engrenage (36) s'engrène avec les portions de crémaillère (18) pour déplacer les mâchoires (14).

9. Unité (10) selon l'une quelconque des revendications précédentes, **caractérisée par le fait que** des capteurs de rotation destinés à détecter la position de rotation de la partie rotative (26) sont prévus dans la partie de base (24) et/ou dans la partie rotative (26).

10. Unité (10) selon l'une quelconque des revendications précédentes, **caractérisée par le fait qu'**une unité électronique (58) destinée à commander les deux moteurs électriques (30, 38) est prévue dans la partie de base (24).

11. Unité (10) selon l'une quelconque des revendications précédentes, **caractérisée par le fait que** l'unité de pivotement (22) et les deux moteurs électriques (30, 38) sont réalisés de telle sorte que la vitesse de rotation du premier moteur électrique (30) est d'un multiple supérieure à la vitesse de rotation du deuxième moteur électrique (38).
